# EUROPÄISCHE PATENTSCHRIFT

(11) **EP 2 484 231 B1**
(45) Veröffentlichungstag und Bekanntmachung des Hinweises auf die Patenterteilung: **12.10.2016**
(21) Anmeldenummer: 12153588.4
(22) Anmeldetag: 02.02.2012
(51) Int. Cl.: A23L 13/20, A23L 23/00

(54) **VERFAHREN ZUR HERSTELLUNG EINES ZWISCHENPRODUKTES FÜR DIE LEBENSMITTELINDUSTRIE AUS SCHLACHTNEBENPRODUKTEN**
METHOD FOR PRODUCING AN INTERMEDIATE PRODUCT FOR THE FOOD INDUSTRY FROM SLAUGHTER BY-PRODUCTS
PROCÉDÉ DE FABRICATION D'UN PRODUIT INTERMÉDIAIRE POUR L'INDUSTRIE ALIMENTAIRE À PARTIR DE SOUS-PRODUITS D'ABATTAGE

(30) Priorität: 03.02.2011 DE 102011000495
(43) Veröffentlichungstag der Anmeldung: 08.08.2012
(73) Patentinhaber: Nienstedt GmbH, 45721 Haltern am See (DE)
(72) Erfinder: Groneberg-Nienstedt, Petra, 40237 Düsseldorf (DE); Gutmann, Dr. Michael, 51379 Leverkusen (DE)
(74) Vertreter: Bungartz, Klaus Peter

(56) Entgegenhaltungen:
- WO-A1-2006/105821
- WO-A1-2007/096363
- WO-A1-2009/052865
- WO-A1-2010/133356
- DE-A1-102007 057 805
- DE-T2- 3 885 638
- FR-A1- 2 575 638

## Beschreibung

Die Erfindung betrifft ein Verfahren zur Herstellung eines knochenhaltigen Zwischenproduktes für die Lebensmittelindustrie aus Schlachtnebenprodukten oder Schlachtabfällen.

### Stand der Technik

Es ist allgemein bekannt, dass bei der Verwertung von Fleisch Schlachtnebenprodukte bzw. Schlachtabfälle anfallen, die bisher in der Regel entweder für die Futtermittelindustrie Verwendung fanden oder entsorgt wurden.

So ist aus der DE 38 85 638 T2 ein Verfahren bekannt, bei dem Büchsen-Haustierfutter aus Fleisch und Fleischsaft hergestellt wird. Hierzu werden verschiedene Zutaten zu einem, zum Beispiel durch Zermahlen von Fleisch gewonnenen, fleischartigen Material verarbeitet, das nachfolgend zerschnitten und mit Fleischsaft in Dosen abgefüllt wird.

Aus der FR 257 56 38 ist ein Verfahren zur Herstellung Kuttel-Brät aus Blöcken von gefrorenen Schweinemägen bekannt. Hier werden die Blöcke aufgebrochen, um die Mägen im gefrorenen Zustand zu trennen und die so getrennten Magenteile durch Tauchen in heißes Wasser aufgetaut. Anschließend werden aufgetauten Mägen in Stücke gehackt und die so erhaltenen Stücke unter Druck gekocht und gewürzt.

Die WO 2010133356 A1 beschreibt ein Verfahren zum Zerkleinern von gefrorenem Hackfleisch zu einer pastösen Masse.

r DE102007057805 lehrt ein Verfahren zur Herstellung von Erzeugnissen aus Schlachtnebenprodukten.

Alle diese Verfahren haben den Nachteil, dass sie nur für Lebensmittel tauglich sind, die vollständig zerkleinert und dann zubereitet und verzehrt werden sollen. Dies schränkt die Art der Eingangsprodukte ein, so dass nicht alle Schlachtnebenprodukte oder -abfälle Verwendung finden können.

Aufgabe der Erfindung ist es daher, aus möglichst vielen knochenhaltigen Schlachtnebenprodukten oder Schlachtabfällen ein Zwischenprodukt herzustellen, das zur Herstellung von Nahrungsmitteln weiterverarbeitet werden kann.

### Beschreibung der Erfindung

Diese Aufgabe wird nach der Erfindung durch ein Verfahren nach Anspruch 1 gelöst. Insbesondere werden die Schlachtnebenprodukte und Schlachtabfälle zu einem Eingangsprodukt zusammengefasst, das im Wesentlichen aus einer Sammlung von einzelnen kleineren Stücken der Schlachtnebenprodukte und/oder Schlachtabfällen besteht. Es kann optional ein Sortierprozess vorgeschaltet werden, der dafür Sorge trägt, dass die Eingangsprodukte alle eine definierte Größe und/oder ein definiertes Gewicht aufweisen. Ferner ist es möglich, dass zu große Schlachtnebenprodukte, die entweder bereits das Soll des Eingangsproduktes überschreiten oder die schwer zu verarbeiten wären, zerkleinert werden. Die Zerkleinerung kann durch Pressen, Sägen oder Schneiden erfolgen.

Die Schlachtnebenprodukte werden optional entweder auf eine Temperatur heruntergekühlt, bei der sie halb oder tiefgefroren sind, und dann über einen Pressrahmen in eine Form gepresst, aus der sich ein Block gewünschter Größe ergibt, der dann, gegebenenfalls unter Zwischenlagern und Transport zu einem weiteren Verarbeitungsort, seinerseits wiederum zerteilt werden kann. Alternativ können die Schlachtnebenprodukte auch erst gepresst und dann in dem Pressrahmen oder nach Überführen in eine Gefrierform gekühlt oder gefroren werden.

Ein besonderer Vorteil der Erfindung ist es also, die Schlachtnebenprodukte frühestmöglich zu dem Eingangsprodukt zusammenzufassen und dieses dann in einen gefrorenen oder tiefgefrorenen Block einzufassen, der dann - optional in einem späteren Prozess nach einem Verbringen zu einem anderen Ort - in einzelne Abschnitte unterteilt werden kann oder direkt in einer Größe hergestellt wird, in der er dann weiterverarbeitet bzw. im Rahmen des Kochvorgangs zubereitet wird.

Besonders bevorzugt ist es, wenn die Blöcke die Standardgröße der Schlachtindustrie aufweisen, zum Beispiel die Größe sogenannter Euro-Kisten der Größe 600 x 400 x 200 mm, in der Fachsprache E2-Kisten genannt. Dabei kann das Fleisch ungefroren oder gefroren in diese Kisten eingebracht werden, wobei in gefrorenen Zustand zunächst ein Pressvorgang erfolgen wird.

Grundsätzlich ist es möglich, die einzelnen Schlachtnebenprodukte unmittelbar vor dem Zusammenfassen zu dem Eingangsprodukt tief zu frieren und die tiefgefrorenen Einzelstücke dann über eine Presse zu dem tiefgefrorenen Block zu formen. Bevorzugt und einfacher ist es allerdings, die Schlachtnebenprodukte zunächst tiefgekühlt oder nur leicht gekühlt weiter zum Eingangsprodukt zu verarbeiten, wobei hier bevorzugt eine Mengenselektion erfolgt, so dass sich Eingangsprodukte einer bestimmten Größe ergeben. Die so zusammengefassten Eingangsprodukte können dann über einen Formprozess in die Form des Zwischenproduktes gepresst werden, wobei das Zwischenprodukt dann wiederum zerteilt werden kann.

Der Pressschritt entspricht im Wesentlichen dem üblichen Pressschritt bei der Herstellung von anderen Lebensmitteln, beispielsweise dem Formen von Stücken aus ganzen Stücken gewachsenen Muskelfleisches. Allerdings kann es je nach zu verarbeitenden Schlachtnebenprodukten empfehlenswert sein den Pressdruck zu reduzieren, um zum Beispiel Knochenbrüche oder Substanzänderungen zu reduzieren oder gar zu vermeiden. Ferner kann die Einwirkzeit des Pressdrucks hierzu erhöht werden.

Das Eingangsprodukt wird hierzu in eine oder mehrere Formen eingelegt, die anschließend über eine von oben einführbare Pressvorrichtung in Form eines Pressstempels mit Druck beaufschlagt wird, wobei sich hieraus dann die gewünschte Form ergibt. Bevorzugt wird beim vorliegenden Verfahren die gewünschte Form eine Quaderform, z.B. in der Größe der Innenmaße der oben genannten E2-Kisten, sein, die besonders leicht lager- und transportierbar ist. Solche Quaderformen können ferner besonders leicht weiterverarbeitet werden, da sie einfach einer Sägevorrichtung oder einer ähnlichen Zerkleinerungsvorrichtung zuführbar sind.

Sofern im Rahmen der weiteren Verarbeitung des Zwischenproduktes für die Lebensmittelindustrie eine Teilung nicht gewünscht ist, beispielsweise im Rahmen einer Großküche, kann natürlich auch auf die spätere Zerkleinerung verzichtet werden.

Erfindungsgemäß können alle Formen von knochenhaltigen Schlachtnebenprodukten und Schlachtabfällen verarbeitet werden. Bevorzugt enthalten diese knochenhaltigen Nebenprodukte aber auch andere Fleischprodukte oder Schlachtreste beispielsweise sonst von den lebensmittelverarbeitenden Betrieben nicht gewünschte Teile wie Hoden, andere Innereien, Tierfüße, Kopffleisch oder Ähnliches. Die so hergestellten Zwischenprodukte können nicht nur für die Herstellung von Lebensmitteln für Menschen, sondern auch als Tierfutter verwendet werden, dies hängt letztlich von den Anforderungen des Abnehmers ab.

Während des Pressvorgangs werden eingebrachte Knochen Fleischanteile verdrängen und sich so in die Form einpassen, je nach Wunsch und Vorselektion auch ohne zu brechen. Alternativ können eingebrachte Knochen auch innerhalb der Pressform durch den Pressstempel gebrochen oder sogar vor dem Einbringen in die Pressform vorgebrochen werden, wobei üblicherweise hierdurch keine weitere Beeinträchtigung des Produktes entsteht.

Um einen Splitter- oder Sprödbruch zu vermeiden ist es möglich, das Produkt, sofern sehr große Knochen oder sehr viele Knochen im Eingangsprodukt enthalten wären, einer Vorbehandlung zu unterziehen. Diese Vorbehandlung kann beispielsweise darin bestehen, dass unter Zimmertemperatur oder möglicherweise sogar erwärmt knochenhaltige Schlachtnebenprodukte gewalzt oder gepresst werden, um die Knochen vorzubrechen, wobei aufgrund der höheren Temperatur der Knochen dann weniger dazu neigt zu zersplittern. Sofern eine vollständige Zerteilung erfolgt, kann auch eine Reinigung als Zwischenschritt vorgesehen sein, alternativ kann möglicherweise auch ein Sortiervorgang vorgenommen werden. Es hängt letztlich davon ab, welche Formen von Schlachtnebenprodukten Verwendung finden.

Nach dem Zusammenfassen der Schlachtnebenprodukte, unbearbeitet oder vorbehandelt, wird dann die gewünschte Menge an Schlachtnebenprodukten in die Form eingegeben und zu der Form des Zwischenproduktes gepresst. Hierbei kann zusätzliches Material zugegeben werden, das entweder aus ganzen Fleischstücken bestehen kann, beispielsweise um die Qualität des Zwischenproduktes zu erhöhen.

Alternativ kann auch ein Hilfsmittel zugegeben werden, das beispielsweise um die Erzeugung eines tiefgefrorenen homogenen Blocks zu vereinfachen aus Wasser bestehen kann und auch Öl enthalten kann, beispielsweise um später einen gewissen Fettanteil in der Brühe zu gewährleisten. Auch Proteine oder tierische Fette können hinzugefügt werden. Es ist möglich, bereits zu dieser Stufe eine gewisse Gewürzzugabe vorzunehmen, so dass ein Grundgewürz schon im Zwischenprodukt enthalten ist.

Nach dem Herstellen des Zwischenproduktes in der gewünschten Form kann dieses zunächst gelagert werden oder alternativ sofort weiterverarbeitet werden. Eine sofortige Weiterverarbeitung, wie auch die spätere Weiterverarbeitung, umfasst das bevorzugte Zerteilen des Zwischenproduktes in kleinere Würfel, die nach der Art eines Brühwürfels dann zur Suppenherstellung Verwendung finden können. Dieses Verfahren ist besonders dann vorteilhaft, wenn das Zwischenprodukt über längere Strecken transportiert wird.

So kann es beispielsweise sein, dass in einem Land größere Mengen an Schlachtnebenprodukten oder Schlachtabfällen anfallen, die in diesem Land aufgrund nationaler Vorlieben nicht verzehrfähig sind. So lange diese Lebensmittel allerdings unbedenklich sind besteht kein Problem darin, diese Produkte in anderen Ländern, in denen derartige Vorbehalte nicht bestehen, weiter zu verarbeiten. So kann das Zwischenprodukt tief gefroren exportiert werden und in einem Zielland weiterverarbeitet werden, wo es dann z. B. zersägt wird.

Das Zerteilen des Zwischenproduktes in Einzelteile kann über die üblichen Teilverfahren, bzw. das aus der Fischstäbchenproduktion bekannte Sägen mit bekannten Maschinen und Anlagen erfolgen. Alternativ kann auch Wasserstrahlschneiden, Laserstrahlschneiden oder auch ein Schneidvorgang erfolgen, sofern die jeweiligen Substanzen dies zulassen.

## Patentansprüche

1. Verfahren zur Herstellung von Zwischenprodukten für die Lebensmittelindustrie aus knochenhaltigen Schlachtnebenprodukten, insbesondere zur Herstellung von Produkten zur Herstellung von Fleisch-, Fisch- oder Geflügelbrühen, wobei Schlachtnebenprodukte in Form von Knochen, nicht anderweitig verwertbaren Fleischanteilen und Innereien zu einem zusammenhängenden, weiterverarbeitbaren Produkt verarbeitet werden, **dadurch gekennzeichnet, dass** das Verfahren die Schritte aufweist:
• Zusammenfassen von Schlachtnebenprodukten in Form einer Sammlung von zumindest teilweise ganze Knochen oder vorgebrochene Knochen enthaltenden Einzelstücken in definierter Menge und Gewicht zu einem Eingangsprodukt,
• Pressen der zu dem Eingangsprodukt zusammengefassten Schlachtnebenprodukte zu einem zubereitungsfertigen oder weiterverarbeitbaren Block gewünschter Größemit einem Formpressverfahren in eine gewünschte Form und
• Kühlen des so hergestellten Blocks.

2. Verfahren zur Herstellung von Zwischenprodukten für die Lebensmittelindustrie nach Anspruch 1, **dadurch gekennzeichnet, dass** die Schlachtnebenprodukte vor dem Pressen gefroren, insbesondere tiefgefroren werden.

3. Verfahren zur Herstellung von Zwischenprodukten für die Lebensmittelindustrie nach dem vorhergehenden Anspruch, **dadurch gekennzeichnet, dass** vor dem Einfrieren knochenhaltige Bestandteile vorgepresst werden, wobei hierzu die knochenhaltigen Bestandteile in eine Form eingedrückt werden und so stark mit Druck beaufschlagt werden, dass die Knochen in kleinere Teile zerbrechen.

4. Verfahren zur Herstellung von Zwischenprodukten der Nahrungsmittelindustrie nach einem der vorhergehenden Ansprüche, **dadurch gekennzeichnet, dass** die Schlachtnebenprodukte vor dem Zusammenfassen zu dem Eingangsprodukt durch einen Schneid- oder Sägeschritt zerteilt werden.

5. Verfahren zur Herstellung eines Zwischenproduktes für die Lebensmittelindustrie nach vorhergehendem Anspruch, **dadurch gekennzeichnet, dass** zur Vermeidung von Spröd- und Splitterbrüchen während des Pressvorganges das Eingangsprodukt vor dem Pressvorgang angewärmt wird.

6. Verfahren zur Herstellung von Zwischenprodukten für die Lebensmittelindustrie nach einem der vorhergehenden Ansprüche, **dadurch gekennzeichnet, dass** die Schlachtnebenprodukte zu einem quaderförmigen Eingangsprodukt geformt werden, das dann tiefgefroren wird.

7. Verfahren zur Herstellung von Zwischenprodukten für die Lebensmittelindustrie nach dem vorhergehenden Anspruch, **dadurch gekennzeichnet, dass** das quaderförmige Eingangsprodukt in Würfel einer vorgegebenen Größe, insbesondere durch Sägen oder Schneiden, zerteilt wird.

8. Verfahren zur Herstellung eines Zwischenproduktes für die Lebensmittelindustrie nach einem der vorhergehenden Ansprüche, **dadurch gekennzeichnet, dass** der Anteil an knochenhaltigen Schlachtnebenprodukten maximal 70% beträgt.

9. Verfahren zur Herstellung von Zwischenprodukten für die Lebensmittelindustrie nach einem der Ansprüche 2 oder 3, **dadurch gekennzeichnet, dass** den Schlachtnebenprodukten vor dem Einfrieren Stücke ganzen, gewachsenen Muskelfleischs zugegeben werden.

10. Verfahren zur Herstellung von Zwischenprodukten für die Lebensmittelindustrie nach einem der Ansprüche 2, 3 oder 9, **dadurch gekennzeichnet, dass** vor dem Einfrieren von den Schlachtnebenprodukten Wasser, Wasseremulsionen oder Öle hinzugegeben werden.

11. Verfahren zur Herstellung von Zwischenprodukten für die Lebensmittelindustrie nach einem der vorhergehenden Ansprüche, **dadurch gekennzeichnet, dass** die knochenhaltigen Schlachtnebenprodukte erst durch einen Sägevorgang in kleinere Stücke zerteilt werden und anschließend dem Verfahren zur Zusammenfassung zum Eingangsprodukt zugeführt werden.

12. Verfahren zur Herstellung von Zwischenprodukten für die Lebensmittelindustrie nach dem vorhergehenden Anspruch, **dadurch gekennzeichnet, dass** nach dem Zerteilen der knochenhaltigen Schlachtnebenprodukte diese einem Waschvorgang zugeführt werden, um Knochensplitter zu entfernen.

13. Verfahren zur Herstellung von Zwischenprodukten für die Lebensmittelindustrie nach einem der vorhergehenden Ansprüche, **dadurch gekennzeichnet, dass** vor Zusammenfassen der Schlachtnebenprodukte zu dem Eingangsprodukt die einzelnen Schlachtnebenprodukte vorgekühlt oder vorgefroren werden.

## Claims

1. Method for producing intermediate products for the food industry from slaughter byproducts containing bone, especially for producing products to make meat, fish or poultry broths, wherein slaughter byproducts in the form of bones, meat portions unable to be used anywhere else and offal are processed to form a cohesive, reusable product, **characterised in that** the method consists of the following steps:
• assembling slaughter byproducts as a collection of at least partly complete bones or precrushed bones containing individual pieces in a defined quantity and weight as the input product,
• pressing to a desired size the slaughter byproducts assembled as the input product into a block prepared for further processing using a forming press process to achieve a desired shape and
• cooling the block made in this manner.

2. Method for producing intermediate products for the food industry according to claim 1, **characterised in that**, before pressing, the slaughter byproducts are frozen, in particular deep frozen.

3. Method for producing intermediate products for the food industry according to the previous claim, **characterised in that**, before freezing, bone-containing components are pre-pressed wherein the bone-containing components are pressed into a shape and so much pressure is applied that the bones are crushed into small pieces.

4. Method for producing intermediate products for the food industry according to any one of the preceding claims, **characterised in that**, before being assembled into the input product, the slaughter byproducts are split in a cutting or sawing step.

5. Method for producing intermediate products for the food industry according to the previous claim, **characterised in that**, in order to avoid splintered and brittle fragments during the pressing process, the input product is warmed up before the pressing process.

6. Method for producing intermediate products for the food industry according to any one of the preceding claims, **characterised in that** the slaughter byproducts are formed into a cube-shaped input product, which is then deep frozen.

7. Method for producing intermediate products for the food industry according to the previous claim, **characterised in that** the cube-shaped input product is split up into cubes of a predefined size, in particular by sawing or cutting.

8. Method for producing intermediate products for the food industry according to any one of the preceding claims, **characterised in that** the proportion of bone-containing slaughter byproducts is not more than 70%.

9. Method for producing intermediate products for the food industry according to any one of the claims 2 or 3, **characterised in that**, before freezing, pieces of whole mature lean meat are added to the slaughter byproducts.

10. Method for producing intermediate products for the food industry according to any one of the claims 2, 3 or 9, **characterised in that**, before freezing the slaughter byproducts, water, water emulsions or oils are added.

11. Method for producing intermediate products for the food industry according to any one of the preceding claims, **characterised in that** the bone-containing slaughter byproducts are firstly split up by a sawing operation into smaller pieces and then supplied to the method for assembling to form the input product.

12. Method for producing intermediate products for the food industry according to the previous claim, **characterised in that**, after splitting down the bone-containing slaughter byproducts, the latter are supplied to a washing operation to remove bone splinters.

13. Method for producing intermediate products for the food industry according to any one of the preceding claims, **characterised in that**, before assembling the slaughter byproducts to form the input product, the individual slaughter byproducts are precooled or prefrozen.

## Revendications

1. Procédé de fabrication de produits intermédiaires pour l'industrie alimentaire à partir d'abats contenant des os, notamment pour la fabrication de produits de type bouillons de viande, de poisson ou de volaille, où les abats sous forme d'os, de triperies et morceaux de viande non utilisables autrement sont transformés en un produit aggloméré réutilisable, **caractérisé en ce que** le procédé comprend les étapes suivantes :
• assemblage d'abats, en récupérant des os au moins partiellement entiers ou bien des morceaux individuels contenant des os précassés en quantité définie et en poids défini pour obtenir un produit de départ,
• pressage des abats regroupés pour composer le produit de départ pour obtenir un bloc prêt à préparer ou retransformable de taille voulue selon un procédé de conformage voulu pour produire une forme voulue,
• refroidissement du bloc ainsi produit.

2. Procédé de fabrication de produits intermédiaires pour l'industrie alimentaire selon la revendication 1, **caractérisé en ce que** les abats sont surgelés, en particulier congelés, avant le pressage.

3. Procédé de fabrication de produits intermédiaires pour l'industrie alimentaire selon la revendication précédente, **caractérisé en ce qu'**avant la congélation, les morceaux contenant des os subissent un pressage préliminaire, où pour ce faire les morceaux contenant des os sont comprimés dans un moule et soumis à une force suffisante pour broyer les os en parties plus petites.

4. Procédé de fabrication de produits intermédiaires de l'industrie agro-alimentaire selon l'une des revendications précédentes, **caractérisé en ce que** les abats, avant l'assemblage pour obtenir le produit de départ, sont découpés ou sciés.

5. Procédé de fabrication de produits intermédiaires pour l'industrie alimentaire selon la revendication précédente, **caractérisé en ce que** pour éviter les fractures par fragilisation ou échardes pendant le processus de pressage, le produit de départ est légèrement chauffé avant le processus de pressage.

6. Procédé de fabrication de produits intermédiaires pour l'industrie alimentaire selon l'une des revendications précédentes, **caractérisé en ce que** les abats sont agglomérés pour obtenir un produit de départ en forme de parallélépipède, produit que l'on va ensuite surgeler.

7. Procédé de fabrication de produits intermédiaires pour l'industrie alimentaire selon la revendication précédente, **caractérisé en ce que** le produit de départ en forme de parallélépipède est réparti en cubes d'une taille donnée, en particulier par sciage ou par découpe.

8. Procédé de fabrication d'un produit intermédiaire pour l'industrie alimentaire selon l'une des revendications précédentes, **caractérisé en ce que** le pourcentage d'abats contenant des os s'élève au maximum à 70%.

9. Procédé de fabrication de produits intermédiaires pour l'industrie alimentaire selon l'une des revendications 2 ou 3, **caractérisé en ce que** l'on ajoute aux abats des morceaux de viande de muscle complète et adulte.

10. Procédé de fabrication de produits intermédiaires pour l'industrie alimentaire selon l'une des revendications 2, 3 ou 9, **caractérisé en ce que** l'on ajoute de l'eau, des émulsions d'eau ou des huiles avant de congeler les abats.

11. Procédé de fabrication de produits intermédiaires pour l'industrie alimentaire selon l'une des revendications précédentes, **caractérisé en ce que** les abats contenant des os sont répartis en plus petits morceaux uniquement par un processus de sciage avant d'être agglomérés pour donner le produit de départ.

12. Procédé de fabrication de produits intermédiaires pour l'industrie alimentaire selon la revendication précédente, **caractérisé en ce qu'**une fois les abats contenant des os découpé, ces derniers sont soumis à un processus de lavage pour retirer les échardes.

13. Procédé de fabrication de produits intermédiaires pour l'industrie alimentaire selon l'une des revendications précédentes, **caractérisé en ce qu'**avant d'agglomérer les abats pour obtenir le produit de départ, les différents abats sont prérefroidis ou précongelés.
